# EUROPEAN PATENT APPLICATION

(11) **EP 3 909 875 A1**
(43) Date of publication of application: **17.11.2021**
(21) Application number: 21171442.3
(22) Date of filing: 30.04.2021
(51) Int. Cl.: B65B 17/02, B65B 35/44, B65B 35/36, B65B 59/00, B65G 47/08

(54) **A GRIPPING GROUP FOR A VARIABLE NUMBER OF GROUPS OF CANS FOR PRODUCING FINISHED PACKAGINGS**

(30) Priority: 15.05.2020 IT 202000011197
(71) Applicant: Rama S.r.l., 22030 Orsenigo (Como) (IT)
(72) Inventor: RAMACCIATO, ANGELO, 22040 Azzano del Parco (CO) (IT); BAROZZI, LORENZO, 22075 Lurate Caccivio (CO) (IT)
(74) Representative: Franco Martegani S.r.l.

(57) **Abstract**

A gripping group for a variable number of groups of cans, comprising at least two series of side gripping elements (50) which are brought to face each other and act on the two longitudinal sides of a preselected number of groups (21) of cans (13), wherein in each series:
- said gripping elements (50) are constrained to each other by means of chains (49) arranged in a closed loop which rotate continuously, bringing the respective series of gripping elements (50) to face each other, each of said gripping elements (50) provides a body (51) equipped with seats (52) which copy a half of the can (13) of a group (21) of cans,
characterized in that in the upper part of said body (51), a housing having a variable volume is provided for at least a peripheral part of a blank (15) to be positioned on said group (21) of cans (13), said housing being defined by sliding elements (53,54) equipped with appendages (53',54') protruding upwards and provided with curved seats (55,56) which house a respective curved section obtained in correspondence with an edge (55') of the blank (15), wherein at least one sliding element (54) is movable with respect to said body (51) of the gripping element (50) and can be moved to selected positions (70) where it is engaged by means of elastic engagement elements (64,65,66,67,68).

## Description

The present invention relates to a gripping group for a variable number of groups of cans for producing finished packages.

Machines are known for the automatic production of packages consisting of beverage cans and the like, suitable for producing groups of the same cans, positioned adjacent to each other in pairs, in order to obtain finished packages of two, four, six or more cans. Alternatively, in a simplified form, the cans are moved forwards consecutively in a single row.

In these machines various types of devices are used for arranging cans or the like consecutively in a predetermined number of groups that must be positioned to form part of trays or supporting blanks.

These blanks in fact provide either a series of consecutive openings or adjacent openings in pairs so as to accommodate two cans juxtaposed and adjacent to each other and divided into groups of cans in the established number of two, four, six, etc. for each finished packaging.

As already mentioned, these machines provide devices which collaborate in the arrangement of cans in the manner indicated above and devices that feed and arrange blanks on the cans of a single group having a predetermined number of cans.

It is also known that these machines are not only used for the arrangement and packaging of a pair of cans or two pairs or three pairs of cans, but are capable of producing, for example, all three types of groups indicated above, or even groups of four adjacent cans or groups of single consecutive cans.

The machine currently provides at least two series of pairs of side gripping elements with pincers which are brought to face each other and act on the two longitudinal sides of the group of a preselected number of cans to form the group of cans that must then receive a corresponding blank which creates the final packaging.

In general, the pairs of gripping elements are produced so that each gripping element of each pair of gripping elements that are brought to face each other can provide, depending on the selected choice for the packaging of the machine, a number of predetermined "operational" seats, i.e. which will receive the can. The other seats on the gripping element will not receive anything.

In this operating configuration, the user must be able to intervene to vary the type of final package, i.e. with a smaller or greater number of cans.

Consequently, in order to obtain a package with a different number of cans, a blank must be used with openings for positioning the cans that is identical to the selected number of cans: therefore having a different size than that previously in use.

The blank is placed above the gripping elements that hold the cans during the positioning of the blank on the same and must provide a housing suitable for its different and variable size depending on the choice of the final packaging selected.

In general, a gripping element provides three or four seats which copy a half of each can of the group of cans to be inserted in the selected blank. Similarly, there can be two seats or even only one seat if the group is reduced to four or two consecutive cans or adjacent to each other in pairs.

When selecting the package to be obtained with the machine, it is consequently necessary to adapt or assemble something that varies the housing for the blank with a number of openings that can receive the preselected number of cans for the desired final packaging.

These assembly and disassembly operations involve rather lengthy stoppages of the machine and therefore the production as there are various gripping elements that are arranged on both sides of the cans being fed on two loop paths that rotate continuously for effecting a continuous packaging and the adjustment or adaptation operations are lengthy and laborious.

Examples of these machines are known from WO 2009/097546 which relates to a packaging machine which comprises two independent paths on which the articles are conveyed and packaged by packaging means. Elements called can spacers are mounted according to two different infinite loop paths and these spacer elements in the example have three adjacent seats. If a package with four or two cans is to be obtained rather than six adjacent cans in this machine, these spacer elements must be replaced with an extremely lengthy and expensive operation.

In addition to these assembly and stoppage costs, there is also the cost of having spacers in stock with a number of different seats in such a number as to satisfy the requirements of the at least two paths that are provided on the machine.

IT MI20090581 A1 relates to a machine for the automatic application of blanks to groups of beverage cans and the like of the present applicant according to the preamble of claim 1.

WO 2008/022296 A2 relates to a metering system for grouping and spacing articles.

US 2004/112714 A1 relates to a device for grouping articles to be loaded in a carton.

The general objective of the present invention is therefore to find a cheaper, less time-consuming and simplified solution for setting up the machine for packaging the selected number of cans. All of this in order to solve the above-mentioned drawbacks of the prior art in an extremely simple, economical and particularly functional way.

A further objective of the present invention is to provide a gripping group which allows a format change of the blank to be effected without the need for removing anything from the machine.

Another objective of the present invention is to provide a group for gripping a variable number of cans that is simple and can also be applied to already existing lines, wherein at present, in order to vary the housing of the selected blank, assembly and disassembly operations must be carried out for adapting the housing of the single blank selected.

The above-mentioned objectives are achieved by a gripping group for a variable number of groups of cans for creating finished packages of consecutive cans produced according to independent claim 1 and the following subordinate claims.

The structural and functional characteristics of the present invention and its advantages with respect to the known art will become even more evident from the following description, referring to the attached schematic drawings, which show an embodiment example of the invention. In the drawings:
- figure 1 is a raised schematic side view showing a machine for the automatic production of packages consisting of groups of beverage cans and the like of the known type wherein a gripping group for a variable number of groups of cans can be applied for producing finished packages according to the present invention;
- figure 2 is a plan view from above of the machine of the known type shown in figure 1 wherein a gripping group for a variable number of groups of cans can be used for producing finished packages according to the present invention;
- figure 3 is an enlarged plan view from above of a section of a machine such as that shown in figures 1 and 2 and which according to the invention provides pairs of gripping elements suitable for forming a gripping group for a variable number of groups of cans for producing finished packages selected thanks to a format-changing device, when arranged in a first operating position;
- figure 4 is a plan view of the section shown in figure 3 in a second operating position when engagement elements act for changing the packaging format;
- figure 5 is a plan view completely similar to figure 3 with the movable sliding elements moved to a second position for receiving a different blank format;
- figures 6 and 7 show a sectional view along the line VI-VI of figure 7 and a view from above of the gripping element alone such as that shown in figure 3, but with four seats for cans;
- figures 8 and 9 show a sectional view along the line VIII-VIII of figure 9 and a view from above of the gripping element alone in the position moved after the intervention of the format-changing device;
- figure 10 is an enlarged detail of figure 8;
- figure 11 is a perspective view showing a finished package produced with the gripping element arranged as shown in figure 7.

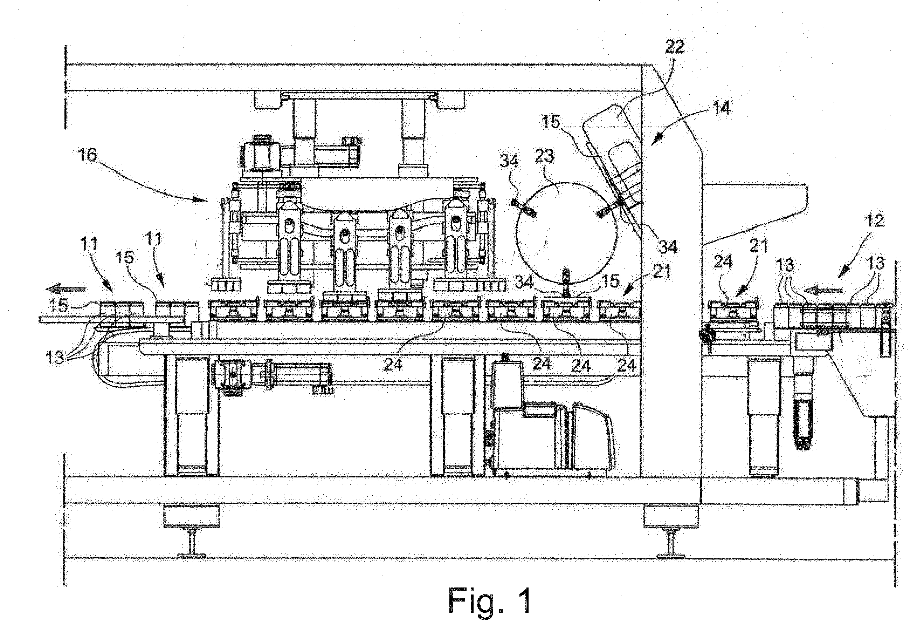

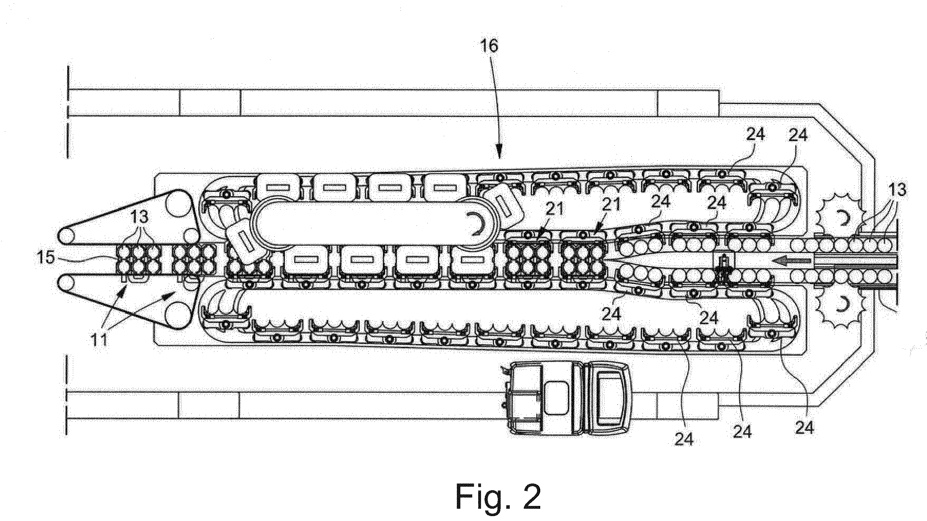

Figures 1 and 2 show an example of a machine for the automatic production of said packages of the known type consisting of groups of beverage cans and the like 11 adjacent to each other and/or arranged consecutively wherein a feeding station 12 of cans 13 is essentially provided.

In this example, the cans are arranged adjacent to each other in pairs, but in a simplified embodiment the cans can simply be arranged consecutively. The machine provides a station 14 for feeding blanks 15 and a station 16 for positioning said blanks 15 on groups of cans 13. This machine is produced by the same applicant.

The term "blanks" 15 refers to flat sheet elements generated from a single sheet, preferably but not limited to cardboard or the like and generated for example from recycled paper material or the like. These flat sheet elements are suitably shear-printed or with the use of suitable dies (not shown) for generating a die-cut product to be applied on the upper part of the cans 13 arranged in groups of two, four, six in aligned pairs and adjacent to each other, but identically in a single row consecutively. The blank 15 therefore provides in the non-limiting example at least a couple of paired openings for at least one pair of cans. In particular, these figures show how the station 12 for feeding cans 13 allows and causes the cans to be received on an underlying conveyor and arranges them consecutively in two parallel, separate rows.

In this machine, two rows of cans 13 are juxtaposed, adjacent to each other, and divided into groups 21 of cans 13 of the established number of two, four, six, as in the example, or even more.

The feeding station 14 of blanks 15 is provided inside the machine for the automatic production of packages, once said groups have been formed. The blanks 15, positioned in a loader 22, stacked on top of each other, are gripped by means of a manipulator or rotary type feeder 23. The manipulator 23, for example by means of suckers 34, takes them from the loader 22 and moves them and positions them one at a time on a respective group of cans 21 which has been previously formed, as shown for example in figure 1.

Furthermore, two series of pairs of side gripping elements 24 act on the two longitudinal sides of each group 21 of cans 13 formed to create a gripping group. The machine illustrated functions only and exclusively for a predetermined group of cans to be inserted into a blank having an identical predetermined number of openings, i.e. in a single format.

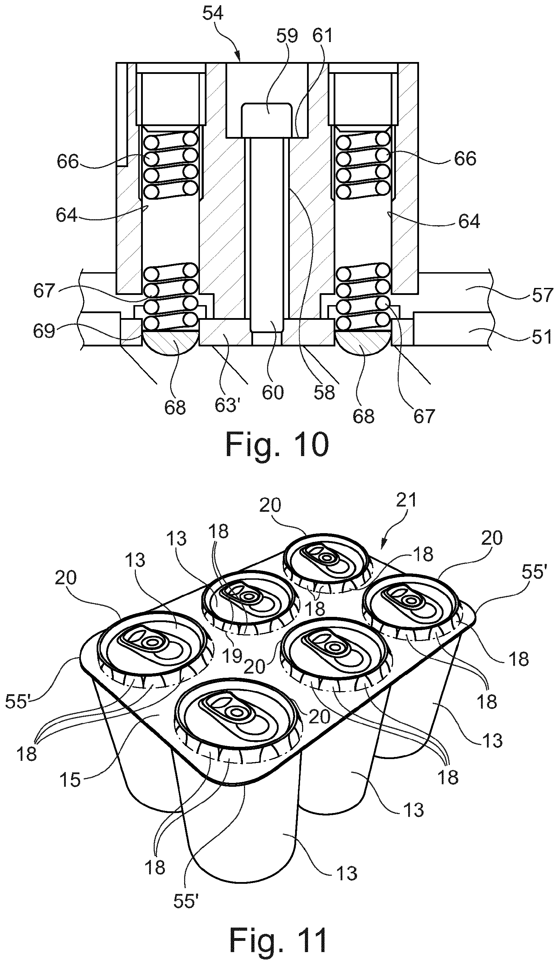

Unlike what is shown in figures 1 and 2, figures 3 to 10, exemplary and non-limiting, show a different gripping group produced according to the present invention which has the possibility of changing the format of the blank in use. The gripping group now under consideration has been designed for gripping a variable number of groups of cans for creating a variable preselected number of finished packages to be arranged in a machine for the automatic production of packages, such as, for example, that of figures 1 and 2 by substituting the gripping groups.

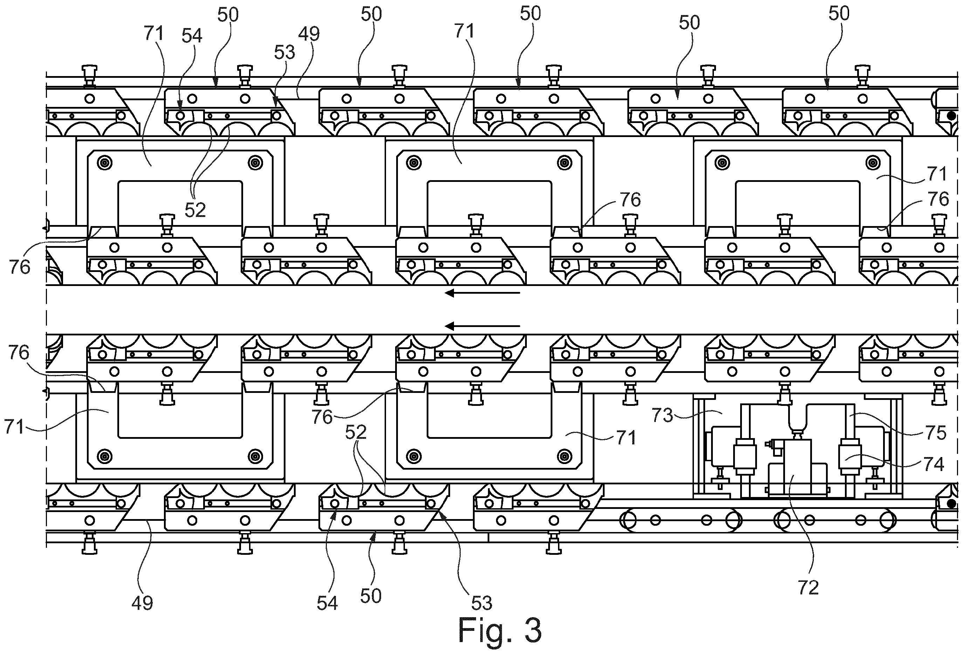

Figures 3, 4 and 5 show pairs of side gripping elements 50 produced according to the present invention, each forming part of opposite series of gripping elements, wherein each series is arranged in the same manner as that shown in figures 1 and 2.

In this case, according to the invention, each gripping element 50 provides a side body 51 which is produced integrally with a chain 49, arranged in a loop (figure 2), which entrains a series of gripping elements 50.

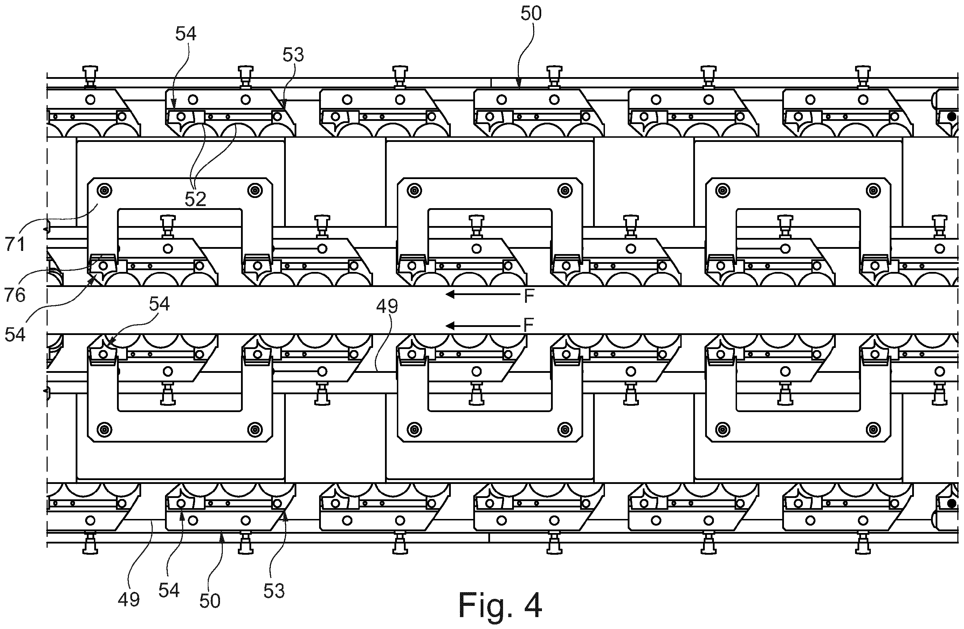

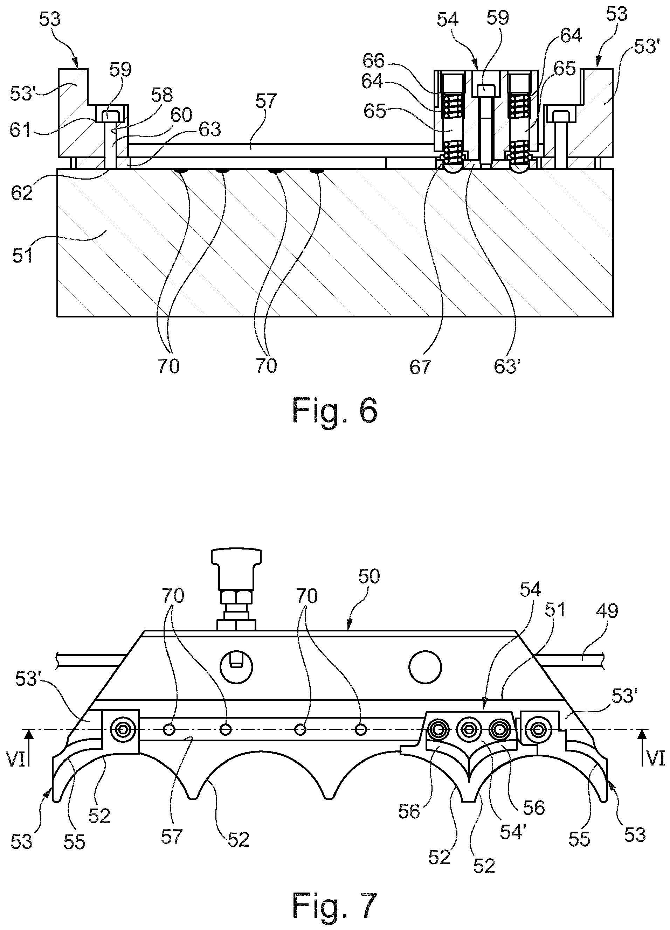

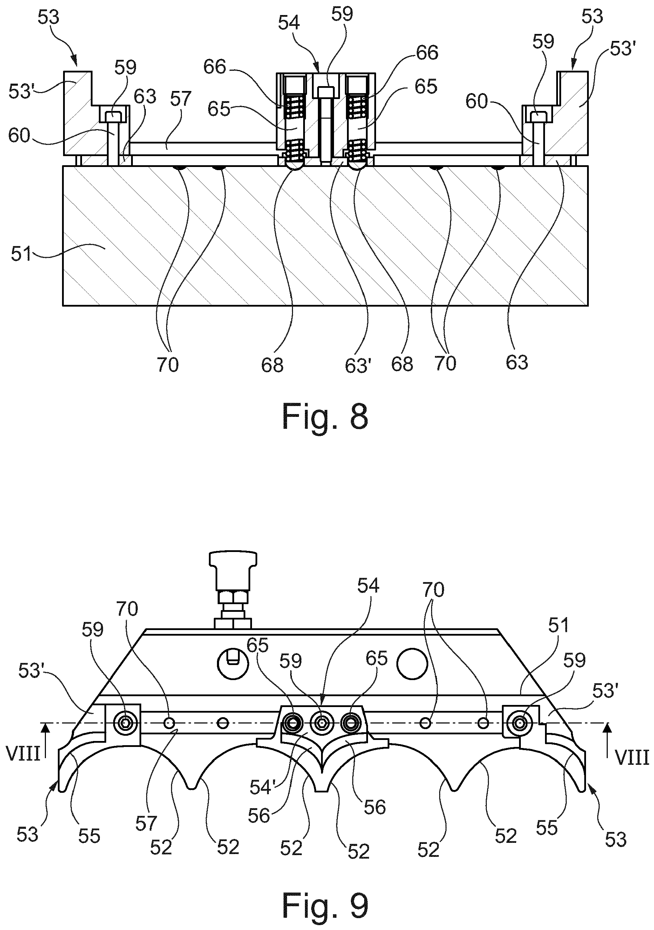

The side body 51 in the non-limiting but purely illustrative examples, provides seats that copy a half of the can 13 of the group 21 of cans. In particular, three seats 52 are shown in figures 3 and 4 and four seats 52 are shown in figures 7 and 9. Two opposite gripping elements 50, when paired with each other, as already shown in figure 2, therefore embrace single or adjacent cans 13 of a group of cans formed 21, from opposite sides. These gripping elements 50 according to the invention of a series of gripping elements are also arranged consecutively and on both sides of the cans. Their advancement is effected, as previously indicated, by means of the above-mentioned chain elements 49 arranged in a closed loop which rotate continuously bringing the two series of gripping elements 50 facing each other at least in correspondence with the feeding station 14 of blanks 15.

The non-limiting and purely illustrative example of figure 3 and subsequent figures, shows, according to what has already been specified, how each gripping element 50 has a side body 51 provided with a series of seats 52 which copy a half of each can 13. Furthermore, said side body 51 in its upper part, opposite the positioning part of the chain 49, provides a housing having a variable volume for at least one peripheral part of a blank 15 to be positioned on a perimetric edge 20 formed protruding and present above each can 13.

Said housing having a variable volume according to the present invention is defined by sliding elements 53 and 54, provided with appendages 53' and 54' projecting upwards and arranged above the gripping elements 50. In particular, the housing is defined by two gripping elements 50 facing each other thanks to the presence on the same of specific curved seats formed in said protruding appendages 53' and 54'.

More specifically, a curved seat 55 is provided in each protruding appendage 53' of a sliding element 53, suitable for receiving a curved section formed in correspondence with an edge 55' of a blank 15 for cans 13. And in general said sliding elements 53 are always kept stationary in the selected position.

Furthermore, in each protruding appendage 54' of each sliding element 54, there is a pair of curved seats 56 for one or two curved sections formed in correspondence with edges 55' of a blank 15. These second sliding elements 54 can, on the other hand, be moved in position in relation to the blank format to be used in the machine.

In any case, it can be seen hereunder that the sliding elements 54 can be moved in inverted T-shaped channels 57, formed above the side body 51, in order to vary the housing for the specific blank to be used.

It can also be seen from the figures that each sliding element 53 and 54 has at least one pass-through hole 58, having a variable diameter. Said hole 58, in a first part having a larger diameter, is suitable for receiving an end head 59 of a screw 60, with a possible washer 61, wherein an opposite threaded end of the screw 60 becomes engaged, when screwed, in a threaded hole 62 of a plate 63. Said plate 63, for example having a quadrilateral shape, is inserted in the shaped channel 57.

In particular, a first sliding element 53 positioned at one end of the side body 51 of each gripping element 50 receives said screw 60 and, as mentioned above, has a protruding appendage 53' on which the curved seat 55 is defined for a curved section 55' formed at each edge of a blank 15.

It can therefore be noted that the second sliding element 54, in addition to being provided with the pass-through hole 58 for said screw 60, extends above the protruding appendage 54' which defines the pair of curved seats 56. Said curved seats 56 face opposite sides with respect to said screw 60 to define two curved sections formed at the edges of two successive blanks 15, if they should be positioned there.

Furthermore, two further holes 64 are provided adjacent to each other, on opposite sides with respect to the pass-through hole 58, so as to receive two Allen screws 65. In particular, each of said holes 64 has sections having a differentiated diameter of which a first upper section receives a first spring 66 which can be positioned on the screw 65 before inserting it into the hole 64. A second lower terminal portion, facing the shaped channel 57, receives a second spring 67 which engages above a ball 68, keeping it in a pass-through seat 69 of the plate 63' which, in this case, is longer than the plate 63 already seen and described and provided with pass-through seats 69. In this way, elastic engagement elements are formed which keep the movable sliding elements 54 in the selected position. For this purpose, the subsequent positions that the sliding elements 54 can acquire are defined by suitable arrangements provided between the movable sliding elements 54 and the shaped channel in which they can be moved. It should be noted, in fact, that the shaped channel 57 provides, on a bottom surface, pairs of grooves 70 which are such as to at least partially receive the balls 68 in the part protruding from below the respective plate 63'. In this way, an engagement is obtained between the sliding element 54 and the side body 51 of the respective gripping element 50, said engagement being due to the elastic engagement elements which keep the movable sliding elements 54 in the selected position. These elastic engagement elements comprise springs 67 which push the balls 68 to become engaged in the respective recesses 70 in the bottom of the channel 57.

It can also be observed that, in the example illustrated, three pairs of recesses 70 are arranged in the shaped channel 57, which therefore allow a different positioning of the second sliding element 54 in three different positions. It is thus possible to define, above the protruding appendages 53' and 54' of the above-mentioned sliding elements 53, 54 through the respective curved seats 55 and 56, the above-mentioned housing having a variable volume, for receiving blanks of different sizes 15 or different formats. This means, blanks provided with one, two, three or four openings or pairs of openings for respective consecutive cans or pairs of adjacent cans, depending on the position acquired by the sliding elements or as in the example, at least one of them, i.e. the sliding element 54.

It will now be seen how according to the invention, by moving the sliding elements 54 of the gripping elements 50 of the gripping groups, seats are defined for a preselected number of groups of cans to be packaged with a respective blank 15 having openings equal to those of the cans 13 being packaged.

In this machine it is therefore possible to form groups of selected cans by blocking them with respective blanks without having to disassemble the single side gripping element arranged integrally with the entrainment chain 49 of the respective series.

Once the gripping elements have been positioned to form the side gripping groups of the invention, in fact, there is no need for any disassembly for varying the type of packaging or using blanks that produce packages of a different number of cans or having a different format.

According to the invention, in fact, a format-changing device has been provided inside the machine which is capable of intervening to vary the operating position of the sliding elements, in particular the movable sliding element 54. Fork elements 71 arranged inside the series of gripping elements 50 which rotate integrally with the chain 49, are in fact provided in the machine. Said fork elements 71 are U-shaped and can be moved between a position detached from said gripping elements and a position in engagement with at least one sliding element 54 of at least one gripping element 50, when its advancement inside the machine is stopped.

Figure 3, in a split portion thereof, shows in fact how an actuation cylinder 72 is provided which controls the forward and backward movement of the fork elements 71 between the above-mentioned positions.

In the machine as shown in figures 3 and 4, for example, three consecutive fork elements 71 are provided which are arranged on a spar 73 parallel to the advance direction of the gripping elements 50.

At least two consecutive fork elements 71 are provided in fact, which act on consecutive gripping elements 50 of a same series of gripping elements. Said spar 73 slides by means of its slides 74 with respect to guiding bars 75 integral with the machine, carrying the fork elements 71 with it.

Said fork elements 71 have a cradle-shaped recess 76 at free ends of their U-shaped body for being engaged to embrace each of the protruding appendages 54' of each second sliding element 54 (figure 4), when the chain element 49 is stopped.

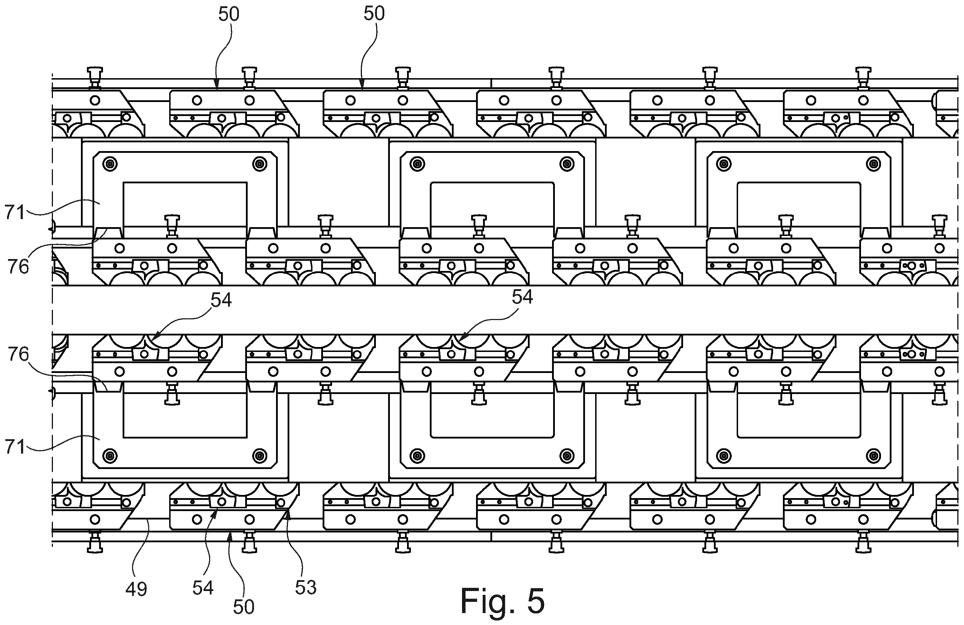

In this engagement position, the chain element 49 carrying the gripping elements 50 is moved one step forward in the direction of the arrows F of figure 4 and this causes the second sliding elements 54 to move by one step, thus blocked with respect to the fork elements 71. The second sliding elements 54 are in fact forced to slide in the channel 57 due to the advancement of the chain element 49. This movement causes the balls 68 of each second sliding element 54 to become disengaged from a respective pair of recesses 70 provided on the bottom of the channel 57 thanks to the presence of the springs 67 which yield to the forced advancement by means of the chain element 49. This sliding by one step is such as to cause the balls 68 to engage in a subsequent pair of recesses 70 in the bottom of the channel 57. In this way, the second sliding elements of each gripping element 50 move acquiring a reciprocal position which is different with respect to the first sliding elements 53 with which they define a different housing for a blank 15 having a different format. Figure 5 shows how the second sliding elements 54 have been moved to an intermediate portion of the gripping elements 50, to receive blanks 15 provided with four openings suitable for receiving four cans 13, unlike how they were positioned in figure 3 where they could receive blanks with six openings for receiving six cans.

At this point, the actuation cylinder 72 is controlled so that it brings the fork elements 71 back causing the cradle-shaped recess 76 to become disengaged from each of the protruding appendages 54' of each second sliding element 54. At this point the chain element 49 is restarted in advancement and the format change is effected for an equal number of consecutive second sliding elements 54. This action of changing the position of the movable sliding elements 54 is effected for both of the series of gripping elements 50 present in the machine completely automatically without any disassembly intervention or prolonged stoppage of the machine itself for various kinds of interventions.

Returning to figures 3 and 4, it can be imagined that in the position shown in these of the second sliding elements 54, the latter define, with the first sliding elements 53, slots for blanks suitable for receiving six cans or three couples of adjacent cans in pairs.

Thanks to the intervention of the format-changing device described above, the second sliding elements 54 can be moved so that they define, with the first sliding elements 53, slots for blanks suitable for receiving four cans or two couples of adjacent cans in pairs.

All as described and illustrated without any manual operation by the operator who very simply inserts the format-changing program so that the machine activates the format-changing device when necessary and for the number of times so as to modify the structure of both of the series of gripping elements 50 present in the machine.

The objective mentioned in the preamble of the description has thus been achieved.

The protection scope of the present invention is defined by the enclosed claims.

## Claims

1. A gripping group for a variable number of groups of cans for producing finished packages in a machine for the automatic production of packages, said group comprising at least two series of side gripping elements with pincers (50) which are brought to face each other and act on the two longitudinal sides of a preselected number of groups (21) of cans (13) to form the group of cans which must then receive a corresponding blank (15) which creates the final package, wherein in each series:
- said gripping elements (50) are arranged consecutively and brought to face each other on both sides of the advancing cans,
- said gripping elements (50) are constrained to each other by means of chain elements (49) arranged in a closed loop which rotate continuously, bringing the respective series of gripping elements (50) to face each other at least in correspondence with a feeding station (14) of blanks (15) above the same,
- each of said gripping elements (50) provides a body (51) equipped with seats (52) which copy a half of the can (13) of a group (21) of cans, wherein
in the body (51) of each gripping element (50), said seats (52) are formed laterally, and **characterized in that** in the upper part of said body (51), a housing having a variable volume is provided for at least a peripheral part of a blank (15) to be positioned on said group (21) of cans (13),
said housing being defined by sliding elements (53,54) equipped with appendages (53',54') protruding upwards and provided with curved seats (55,56) which house a respective curved section obtained in correspondence with an edge (55') of the blank (15),
wherein at least one sliding element (54) is movable with respect to said body (51) of the gripping element (50) and can be moved to selected positions (70) where it is engaged by means of elastic engagement elements (64,65,66,67,68).

2. The gripping group according to claim 1, **characterized in that** said selected positions are defined by means of pairs of grooves (70) obtained in a bottom surface of a shaped channel (57) in which said movable sliding element (54) slides.

3. The gripping group according to claim 1 or 2, **characterized in that** the appendages (54') of said movable sliding element (54) are engaged with fork elements (71) which can be moved between a position detached from said gripping elements (50) and a position engaged with at least one movable sliding element (54) of at least one gripping element (50), when its advancement inside the machine is stopped.

4. The gripping group according to claim 3, **characterized in that** an actuation cylinder (72) controls the forward and backward movement of the fork elements (71) between the above-mentioned positions, said fork elements (71) being arranged on slides (74) sliding on guiding bars (75) integral with a structure of the machine.

5. The gripping group according to claim 3 or 4, **characterized in that** at least two consecutive fork elements (71) are provided which intervene on consecutive gripping elements (50) of the same series of gripping elements.

6. The gripping group according to claim 4 or 5, **characterized in that** said fork elements (71) provide cradle-shaped grooves (76) at their free ends for being engaged to embrace each of the protruding appendages (54') of each movable sliding element (54), when the chain element (49) is stopped.

7. The gripping group according to claim 6, **characterized in that** in the engagement position of said grooves (76) with said protruding appendages (54') of each movable sliding element (54), the chain element (49) bearing the gripping elements (50) is moved one step forward or backward and this causes the movement by one step of the sliding elements (54), thus blocked with respect to the fork elements (71).

8. The gripping group according to one or more of the previous claims, **characterized in that** said elastic engagement elements provided in each movable sliding element (54) comprise holes (64) which receive an Allen screw (65) which at least on its free end receives a spring (67) which is engaged above a ball (68) that becomes positioned in one of said selected positions (70) of said body (51) of the respective gripping element (50).
